# EUROPÄISCHE PATENTANMELDUNG

(11) **EP 1 840 544 A1**
(43) Veröffentlichungstag der Anmeldung: **03.10.2007**
(21) Anmeldenummer: 07002593.7
(22) Anmeldetag: 07.02.2007
(51) Int. Cl.: G01K 1/14, G01K 13/06

(54) **Messring und Messeinheit zur Kolbenstangentemperaturmessung**

(30) Priorität: 30.03.2006 DE 102006015319
(71) Anmelder: STASSKOL Kolbenstangendichtungen GmbH, 39418 Staßfurt (DE)
(72) Erfinder: Schmidt, Gerhard, 39122 Magdeburg (DE); Borchardt, Thomas, 38820 Halberstadt (DE)
(74) Vertreter: Fuchs

(57) **Zusammenfassung**

Es wird ein Messring (1) sowie eine Messeinheit zur Temperaturmessung einer Kolbenstange beschrieben.

Die Aufgabe der Erfindung besteht darin, einen Messring beziehungsweise eine Messeinheit zur präzisen Messung der Kolbenstangentemperatur während des Betriebes innerhalb der Kolbenstangendichtung zu entwickeln.

Die Aufgabe wird unter anderem dadurch gelöst, dass der Messring (1) berührungslos um die Kolbenstange (2) angeordnet ist und zum Einsetzen eines ersten Temperaturmesselementes (3) eine erste Bohrung (4) aufweist, welche an einer äußeren Mantelfläche (5) des Messrings (1) austritt und mit ihrem Bohrlochtiefsten (6) bis an eine innere Mantelfläche (7) des Messrings (1) heranreicht.

## Beschreibung

Die Erfindung betrifft einen Messring sowie eine Messeinheit zur Temperaturmessung einer Kolbenstange beispielsweise eines Verdichters.

In der Vergangenheit sind bereits viele Bestrebungen unternommen worden, die Temperatur der oszillierenden Kolbenstange während des Betriebes innerhalb der Kolbenstangendichtung zu messen. Die Kontrolle der Kolbenstangentemperatur ermöglicht es, unzulässige Aufheizungen der Kolbenstange festzustellen und gegebenenfalls dem Betreiber des Verdichters rechtzeitig vor Erreichen einer kritischen Temperatur ein Warnsignal zur Verfügung zu stellen. Dadurch wird die Verfügbarkeit des Verdichters erheblich gesteigert und ein bevorstehender Ausfall der Kolbenstangendichtung vorher signalisiert.

Die eingesetzten Kolbenstangendichtungen weisen Kammern, Drosseleinrichtungen, Dicht-, Deck- und Stützringe sowie so genannte Schmierringe auf. Eine erste bekannte Möglichkeit der Temperaturmessung besteht darin, durch einen Flansch oder eine Kammer axial Bohrungen einzubringen und durch diese die Temperatur der Kolbenstangendichtung zu messen. Dabei wird jedoch die Wandtemperatur der Kolbenstangendichtung im Abstand von 30 mm bis 50 mm zur Kolbenstange gemessen, so dass diese gemessene Temperatur nicht der Temperatur der Kolbenstange entspricht. In vielen Fällen werden die Kolbenstangendichtungen in einer gekühlten Ausführung eingesetzt. Dieses führt zu einem noch weiter verfälschten Messergebnis, da der Temperaturmessfühler die gekühlte Wandtemperatur der Kolbenstangendichtung misst und dadurch mögliche Veränderungen der Kolbenstangentemperatur in viel geringerem Maße festgestellt werden.

Eine bekannte zweite Variante umfasst eine berührungslose Messung der Kolbenstangentemperatur mittels eines Strahlungspyrometers. Dieses Messprinzip basiert auf Reflexionseigenschaften der Oberfläche und ist für polierte Oberflächen wie die der Kolbenstange problematisch, da sich die Oberflächenfarbe und Oberflächenstruktur während des Betriebes ändert und mit der zu Beginn des Betriebes eingestellten Justierung nicht mehr identisch ist.

Eine weitere bekannte dritte Variante ist die direkte Messung der Kolbenstangentemperatur mittels eines Schleifkontaktes auf der Oberfläche der oszillierenden Kolbenstange. Eine derartige Messvorrichtung ist beispielsweise in der DD 216 069 A1 offenbart. Diese umfasst einen leitfähigen Schleifkontakt, welcher in einem Führungselement geführt und verschleißbegrenzt gelagert ist. Der aus einem selbst schmierenden Trockenlaufwerkstoff gefertigte Schleifkontakt ist über eine selbsttätige Nachstelleinrichtung an die Kolbenstangenoberfläche angelegt. Die eigentliche Messung der Kolbenstangentemperatur erfolgt mit einem in den Schleifkontakt eingeschobenen und darin gesicherten Temperaturgeber. Der wesentliche Nachteil dieser bekannten Temperaturmessung liegt darin, dass durch das Anpressen des Schleifkontaktes Reibungswärme erzeugt wird, welche die tatsächliche Temperatur der Kolbenstange als auch des Schleifkontaktes verändert und unweigerlich zu verfälschten Messwerten führt. Andererseits ist der Schleifkontakt meistens in dem so genannten Laternenraum also außerhalb der Kolbenstangendichtung angeordnet, so dass durch eine Wärmeabstrahlung eine Abkühlung der Kolbenstange erfolgt und deshalb eine Temperatur gemessen wird, die vom Ort der Wärmeentstehung, nämlich innerhalb der Kolbenstangendichtung relativ weit entfernt ist.

Demzufolge liegt der Erfindung die Aufgabe zugrunde, einen Messring beziehungsweise eine Messeinheit zur präzisen Messung der Kolbenstangentemperatur während des Betriebes innerhalb der Kolbenstangendichtung zu entwickeln.

Die Aufgabe wird erfindungsgemäß dadurch gelöst, dass der Messring berührungslos um die Kolbenstange angeordnet ist und zum Einsetzen eines ersten Temperaturmesselementes eine erste Bohrung aufweist, welche an einer äußeren Mantelfläche des Messrings austritt und mit ihrem Bohrlochtiefsten bis an eine innere Mantelfläche des Messrings heranreicht.

Die Temperaturmessung erfolgt dann durch Einsetzen eines Temperaturmesselementes in die Bohrung, wobei die Wärmeübertragung durch Wärmeleitung von dem Temperaturmesselement erfasst wird. In dieser einfachsten Ausführungsform besteht keine Verbindung zwischen dem Bohrlochtiefsten und der inneren Mantelfläche des Messrings, so dass diese Ausführungsform besonders für mit einem Schmiermittel betriebene Verdichter geeignet ist, da kein Schmiermittel in die Bohrung gelangen und dadurch die Messungen verfälschen kann. Darüber bietet diese Ausführung keinen Bauraum, der sich durch Abrieb zusetzen kann und nachfolgend eine isolierende Funktion übernimmt.

Vorteilhafterweise mündet das Bohrlochtiefste in eine Ausnehmung und die Ausnehmung ist in die innere Mantelfläche des Messrings eingebracht. Die Ausnehmung durchbricht die innere Mantelfläche und sorgt für eine offene Verbindung von Bohrung und Ausnehmung. Die Ausnehmung kann ein Vielfaches des Durchmessers der Bohrung aufweisen. Beim Einsetzen eines Temperaturmesselementes ragt dessen Spitze bis ins Bohrlochtiefste oder die Ausnehmung, so dass eine Wärmeübertragung durch Strahlung auf die Spitze des Temperaturmesselementes erfolgt. Diese Ausführungsform ist besonders gut für den Trockenlaufbetrieb geeignet.

Gemäß einer besonders bevorzugten Ausführungsform ist zusätzlich eine zweite Bohrung zum Einsetzen eines zweiten Temperaturmesselementes vorgesehen ist, welche mit ihrem ersten Ende an der äußeren Mantelfläche des Messrings austritt und mit ihrem zweiten Ende in einer Ausnehmung mündet, wobei die Ausnehmung in die innere Mantelfläche des Messrings eingebracht ist. Diese Ausführungsform beinhaltet also kombiniert in einem einzigen Messring die beschriebene Ausführungsform mit einem Sackloch als Bohrung, ergänzt um die Ausführungsform mit einer Ausnehmung im Bohrlochtiefsten und einem Durchbruch zu der inneren Mantelfläche.

Der Vorteil zwei unterschiedliche Bohrungen in den Messring einzubringen liegt zunächst darin, dass grundsätzlich nur ein Typ von Messring unabhängig von der Schmierungsart des Verdichters produziert zu werden braucht. Des Weiteren lässt sich mit zwei in den Messring eingesetzten Temperaturmesselementen eine besonders effektive Verdrehsicherung in beide Drehrichtungen erzielen. Der wesentliche Aspekt besteht jedoch in der Möglichkeit, eine Temperaturüberwachung über zwei unabhängige Messstellen vorzunehmen, wobei einmal ein Wärmeübergang durch Wärmestrahlung und andererseits auch ein Wärmeübergang durch Wärmeleitung gemessen wird. Durch diese redundante Anordnung ist auch im Falle des Ausfalls eines Temperaturmesselementes eine Temperaturüberwachung weiterhin möglich.

Günstigerweise treten die erste und zweite Bohrung an gegenüberliegenden Seiten aus dem Messring heraus. Dieses ermöglicht im eingebauten Zustand eine gute Erreichbarkeit der Bohrungen.

Die Bohrungen sollten in Umfangsrichtung schräg in den Messring eingebracht sein. Bei einer radialen Ausrichtung der Bohrung(en) wäre die Bohrlochlänge deutlich verkürzt und es würde nicht genug Platz zur Verfügung stehen, um auch eine betriebssichere Befestigung des Temperaturmesselementes zu gewährleisten.

Vorzugsweise sind die erste und die zweite Bohrung gegensinnig in den Messring eingebracht, so dass die Spitzen der eingesetzten Temperaturmesselemente die Temperatur in einem annähernd gemeinsamen Kreisabschnitt messen. Darüber hinaus ragen die Anschlüsse der eingesetzten Temperaturmesselemente zu einer Seite aus dem Messring, wodurch der Einbau und die Wartung vereinfacht werden.

Eine Teilaufgabe besteht auch darin, eine Messeinheit zur Temperaturmessung einer Kolbenstange bereitzustellen, umfassend einen vorstehend beschriebenen Messring, der berührungslos um die Kolbenstange angeordnet ist, der eine erste Bohrung aufweist, welche an einer äußeren Mantelfläche des Messrings austritt und mit ihrem Bohrlochtiefsten bis an eine innere Mantelfläche des Messrings heranreicht, der in einem Gehäuse angeordnet ist, welches aus einem Tragring und einem Verschlussflansch gebildet ist, und der eine in axialer Richtung verlaufende Bohrung zur Aufnahme der Kolbenstange aufweist, sowie mindestens ein erstes Temperaturmesselement, welches in mindestens eine Öffnung des Tragrings eingesetzt ist und mit seiner Spitze in das Bohrlochtiefste hineinreicht.

Der Messring weist demzufolge einen größeren Durchmesser auf als die durch ihn hindurch laufende Kolbenstange, damit dieser keine Wärme erzeugt und die Messung dadurch beeinflusst wird. Das Einsetzen der Temperaturmesselemente erfolgt von außen durch den Tragring in den darin befindlichen Messring. Hierfür sind die Öffnung des Tragrings und die Bohrung des Messrings vorzugsweise in einer Flucht zueinander ausgerichtet oder die Öffnung so groß gestaltet, dass ein Einschieben des Temperaturmesselementes bis in die Bohrung möglich ist.

Die Messeinheit kann auch ein Temperaturmesselement umfassen, das in eine Öffnung des Tragrings eingesetzt ist und mit seiner Spitze in eine in die innere Mantelfläche des Messrings angeordnete Ausnehmung hineinragt. Diese Ausführungsform kann alternativ oder, was bevorzugt ist, zusätzlich zu der Ausführungsform mit einer Bohrung als Sackloch an der Messeinheit verwirklicht sein.

In einer weiteren Ausführungsform weist die Messeinheit an dem äußeren Ende der Öffnung jeweils einen Befestigungsflansch auf. Mit diesem Befestigungsflansch lässt sich besonders einfach das Temperaturmesselement verbinden.

Innerhalb der Messeinheit kann der Messring in axialer Richtung durch einen vorderen und einen hinteren Isolationsring begrenzt sein. Die Isolationsringe minimieren einen Wärmeabfluss aus dem Messring in das Dichtungsgehäuse und sorgen dadurch für besonders exakte Messungen.

Günstigerweise sind die Isolationsringe aus PTFE gefertigt. Der Messring dagegen sollte aus einem gut Wärme leitenden Material gefertigt sein. Für Verdichter im Trockenlauf-Betrieb kommen dafür Kunstkohle oder ein Sintermaterial in Frage. Für Einsätze mit Fremdschmierung sind als Materialien für den Messring beispielsweise Gussmaterialien, insbesondere Rotguss, oder ebenfalls Sintermaterialien wie Sintereisen oder Sinterbronze geeignet.

Konstruktiv hat es sich als vorteilhaft herausgestellt, wenn das Gehäuse einen Innenraum aufweist, dessen Breite in axialer Richtung der Breite des Messrings und beider Isolationsringe entspricht. Dieses ermöglicht in zusammengesetztem Zustand eine in axialer Richtung nahezu spielfreie Anordnung von Messring und Isolationsringen.

Eine Fixierung des Messrings innerhalb der Messeinheit kann dadurch erreicht werden, dass der Messring auf einer Seite mit einem in axialer Richtung konisch zulaufenden Vorsprung und der vordere Isolationsring auf der dem Messring zugewandten Seite mit einer bezüglich des Vorsprungs komplementären Gleitfläche ausgebildet ist. Durch die keilförmige Gleitfläche fungiert der erste Isolationsring als Spannring, der zusätzlich mit einem Federelement versehen sein kann, und verspannt über den Vorsprung des Messrings diesen in axialer Richtung.

Vorteilhafterweise weist das Gehäuse einen Innenraum auf, dessen Höhe in radialer Richtung größer ausgebildet ist als der Außendurchmesser des Messrings und/oder der Isolationsringe. Dieser freie Ringraum ermöglicht bei radialen Schwingungen der Kolbenstange ein Ausweichen des Messrings und der Isolationsringe, so dass kein Verschleiß und insbesondere auch keine Reibungswärme entstehen, welche die Temperaturmessung beeinflussen könnte.

Zum besseren Verständnis wird die Erfindung nachfolgend anhand von fünf Zeichnungsfiguren näher erläutert. Dabei zeigen die:
- **Fig. 1:**: eine perspektivische Vorderansicht auf eine Messeinheit mit Gehäuse, Messring und Isolationsringen;
- **Fig. 2:**: eine Vorderansicht auf eine Messeinheit mit zwei darin eingesetzten Temperaturmesselementen;
- **Fig. 3:**: einen Schnitt durch die Messeinheit gemäß der Schnittlinie A:A in Fig. 2;
- **Fig. 4:**: eine perspektivische Ansicht auf eine Messeinheit in zusammengesetztem Zustand und
- **Fig. 5:**: einen Querschnitt durch eine Kolbenstangendichtung mit eingebauter Messeinheit.

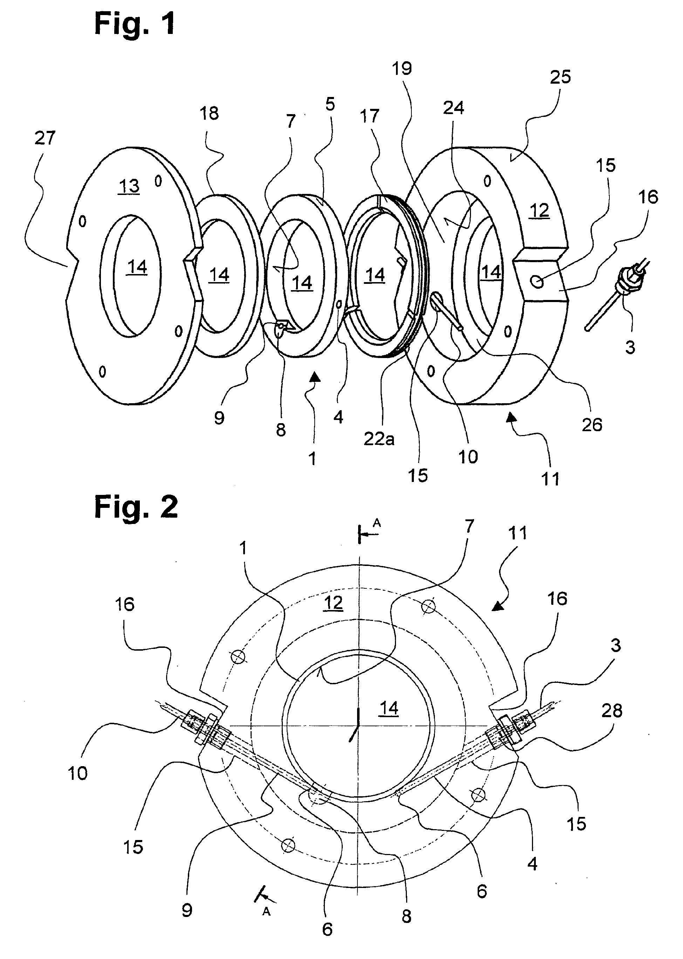

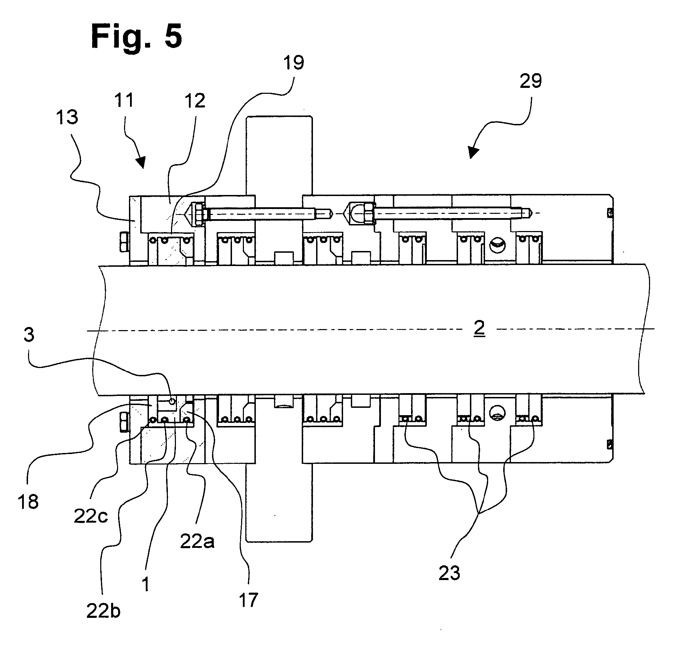

Die Figur 1 zeigt wesentliche Komponenten einer Messeinheit in versprengter perspektivischer Ansicht. Zu diesen wesentlichen Komponenten gehört das Gehäuse 11 mit seinem Tragring 12 und einem Verschlussflansch 13. Sowohl der Tragring 12 als auch der Verschlussflansch 13 weisen eine zentrische Bohrung 14 zur Aufnahme einer in Figur 5 sichtbaren Kolbenstange 2 auf.

Darüber hinaus sind in den Tragring 12 zwei Öffnungen 15 zu erkennen, die sich von jeweils einem in der äußeren Mantelfläche 25 ausgebildeten Befestigungsflansch 16 bis zu der inneren Mantelfläche 24 erstrecken. Die Befestigungsflansche 16 sind aus der äußeren Mantelfläche 25, vorzugsweise auf dessen gesamten Breite, in radiale geneigter Richtung ausgenommen, wobei der Befestigungsflansch 16 rechtwinklig zu der Öffnung 15 ausgerichtet ist. Bei den hier gezeigten zwei gegenüberliegenden Befestigungsflanschen 16 sind diese gegensinnig geneigt in den Tragring 12 eingebracht.

In zusammengesetztem Zustand werden in die Öffnungen 15 ein erstes und zweites Temperaturmesselement 3, 10 eingesetzt, was beispielhaft anhand des zweiten Temperaturmesselementes 10 dargestellt ist. Beide Temperaturmesselemente 3, 10 ragen dann über die innere Mantelfläche 24 hinaus in einen auf der Innenseite des Tragrings 12 ausgebildeten Innenraum 19 hinein.

Der Innenraum 19 ist mit einem größeren Innendurchmesser versehen als der Außendurchmesser der Kolbenstange 2, so dass endseitig an dem Tragring 12 eine radial ausgerichtete Abschlusswand 26 verbleibt. In diesen Innenraum 19 sind ein vorderer Isolationsring 17, der Messring 1 und ein hinterer Isolationsring 18 eingebracht. In der Darstellung der Figur 1 ist der vordere Isolationsring 17 dreiteilig mit einem Stoßspiel ausgeführt, der ein radiales Zusammenziehen des Isolationsringes 17 mittels eines Federelementes 22a ermöglicht. Das Federelement 22a befindet sich in einer umlaufenden Ringnut der äußeren Mantelfläche des Isolationsringes 17.

Der Messring 1 weist zwei Bohrungen 4, 9 auf, die sich von einer äußeren Mantelfläche 5 zu einer inneren Mantelfläche 7 des Messringes 1 erstrecken, wobei die zweite Bohrung 9 in einer Ausnehmung 8 der inneren Mantelfläche 7 mündet. Beide Bohrungen verlaufen bezogen auf die innere Mantelfläche 7 innerhalb des Messrings 1 in tangentialer Richtung.

In zusammengesetztem Zustand ist der Messring 1 innerhalb des Tragrings 12 derart ausgerichtet, dass sich die Bohrungen 4, 9 in Verlängerung der Öffnungen 15 befinden und dabei einen geradlinig geformten freien Bauraum ausbilden, in welchen die Temperaturmesselemente 3,10 eingesteckt werden können.

Die in den Tragring 12 eingelegten Ringe 1, 17, 18 werden nach außen durch Aufschrauben des Versschlussflansches 13 in weiter unten stehender Weise in axialer Richtung unter Spannung gesetzt. Der Verschlussflansch 13 ist an seinem radialen äußeren Umfang ebenfalls mit Ausschnitten 27 entsprechend der Befestigungsflansche 16 des Tragrings 12 versehen.

Eine zusammengesetzte Messeinheit ist in Figur 2 dargestellt. Dabei fällt auf, dass die erste Bohrung 4 mit dem darin befindlichen ersten Temperaturmesselement 3 nah an die innere Mantelfläche 7 heranreicht, ohne diese mit dem Bohrlochtiefsten 6 zu durchbrechen. Mit Hilfe dieses ersten Temperaturmesselementes 3 wird eine Wärmeübertragung durch Wärmeleitung gemessen. Die erste Bohrung 4 weist hierfür einen Innendurchmesser auf, welcher nur geringfügig größer ist als der Außendurchmesser des Temperaturmesselementes 3, so dass das Temperaturmesselement 3 in Kontakt mit der Bohrlochwand der Bohrung 4 steht und ein Wärmeübergang durch Wärmeleitung möglich ist. Durch dass passgenaue Einsetzen der Temperaturmesseinheit 3 resultiert auch eine mechanisch hoch belastbare Fixierung. Die Öffnung 15 des Tragrings 12 weist einen deutlich größeren Durchmesser auf als die Bohrung 4 des Messrings 1. Der Durchmesser der Öffnungen 15 ist auf einen Befestigungsabschnitt 28 des Temperaturmesselementes 3, 10 abgestimmt.

Auf der gegenüberliegenden Seite des Gehäuses 11 ist in den Befestigungsflansch 16 beziehungsweise die zweite Bohrung 9 das zweite Temperaturmesselement 10 eingesetzt. Der Unterschied zu dem zuvor beschriebenen ersten Temperaturmesselement 3 besteht darin, dass das Bohrlochtiefste 6 der zweiten Bohrung 9 in eine Ausnehmung 8 übergeht, welche die innere Mantelfläche 7 durchbricht und einen zur Kolbenstange 2 (siehe Figur 5) offenen Bauraum bildet. Aufgrund des offenen Bauraums wird bei dieser Ausführungsform besonders präzise ein Wärmeübergang durch Wärmestrahlung gemessen.

Während des Betriebes stellen die beiden gegeneinander geneigten Temperaturmesselemente 3, 10 eine effektive Verdrehsicherung des Messringes 1 gegenüber dem Tragring 12 dar.

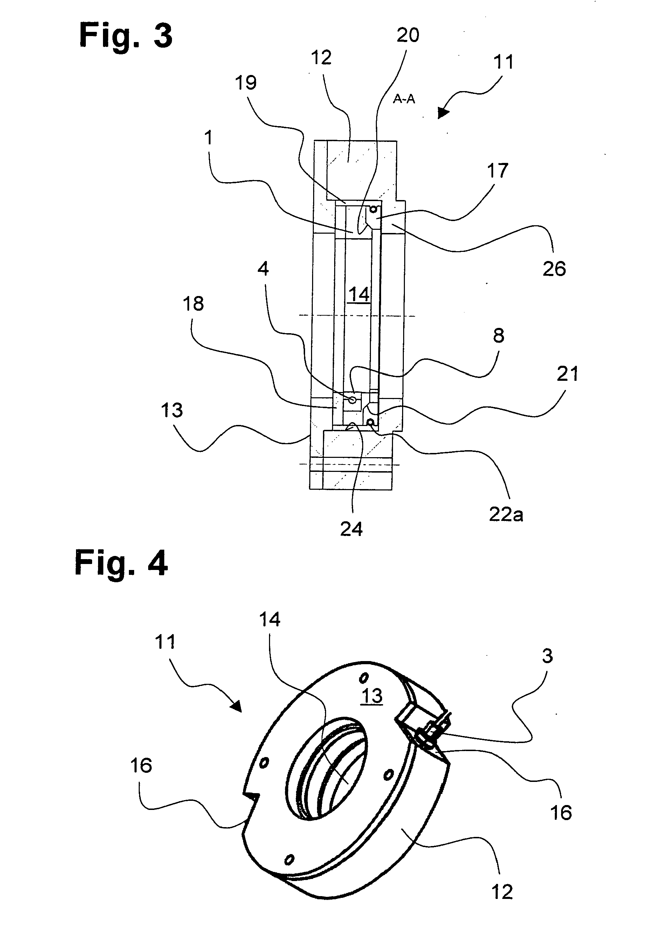

Die geschnittene Darstellung gemäß Figur 3 verdeutlicht besonders gut die axiale Vorspannung der Isolationsringe 17, 18 und des dazwischen angeordneten Messrings 1 innerhalb des Gehäuses 11. Dabei liegt der vordere Isolationsring 17 flächig an der Abschlusswand 26 des Tragrings 12 an. Der vordere Isolationsring 17 weist eine konisch umlaufende Gleitfläche 21 auf, die sich auf einem ebenfalls um ca. 45° geneigten umlaufenden Vorsprung 20 des Messrings 1 abstützt. Mit Hilfe des den vorderen Isolationsring 17 umgebenden Federelementes 22a wird der Isolationsring 17 zusammengezogen und drückt dadurch mit seiner Gleitfläche 21 gegen den Vorsprung 20 des Messrings 1. Aufgrund der Neigung von Gleitfläche 21 und Vorsprung 20 wird die radial durch das Federelement 22a aufgebrachte Spannkraft in eine axiale Bewegung umgewandelt und die Isolationsringe 17, 18 sowie der Messring 1 kraftschlüssig innerhalb des Innenraums 19 ohne axiales Spiel gehalten.

Darüber hinaus ist in der Figur 3 zu erkennen, dass der Innenraum 19 in radialer Richtung größer ausgeformt ist, als der Messring 1 beziehungsweise die Isolationsringe 17, 18. Der dadurch entstehende freie Ringraum um die Ringe 1, 17, 18 ermöglicht ein radiales Spiel der Kolbenstange 2, ohne dass es zu einem Anstoßen der Ringe 1, 17, 18 an der inneren Mantelfläche 24 des Tragrings 12 kommt.

Die Figur 4 zeigt in einer perspektivischen Draufsicht eine zusammengesetzte Messeinheit. Die in den Tragring 12 von außen eingesetzten Temperaturmesselemente 3, 10 ragen dabei seitlich über den Tragring 12 hinaus.

Die Figur 5 stellt die in Figur 4 gezeigte zusammengesetzte Messeinheit in eingebauten Zustand in einer Kolbenstangendichtung 29 dar. Die Kolbenstange 2 verläuft in axialer Richtung durch das Gehäuse 11 und die Ringe 1, 17, 18 sowie den Verschlussflansch 13 hindurch, ohne diese zu berühren. Die eigentliche Abdichtung der Kolbenstange 2 erfolgt über die Dichtungselemente 23, so dass sich die Messeinheit in einem druckfreien Abschnitt der Kolbenstangendichtung 29 befindet.

Abweichend von der vorstehend beschriebenen Ausführungsform sind gemäß Figur 5 auch der Messring 1 und der hintere Isolationsring 18 jeweils mehrteilig, vorzugsweise dreiteilig, ausgeführt, jedoch ohne ein Stoßspiel, so dass der Messring 1 und der Isolationsring 18 stets einen vorgegebenen konstanten Durchmesser aufweisen. Aus der mehrteiligen Ausführungsform resultiert der Vorteil, dass bei einer späteren Montage/Demontage die Ringe 1, 17, 18 gewechselt werden können, ohne dass ein Ausbau der Kolbenstange 2 notwendig ist. Der mehrteilige Messring 1 und der mehrteilige hintere Isolationsring 18 werden jeweils mittels Federelemente 22b, 22c formstabil zusammengehalten.

### Bezugszeichenliste

- 1: Messring
- 2: Kolbenstange
- 3: erstes Temperaturmesselement
- 4: erste Bohrung
- 5: äußere Mantelfläche Messring
- 6: Bohrlochtiefste
- 7: innere Mantelfläche Messring
- 8: Ausnehmung
- 9: zweite Bohrung
- 10: zweites Temperaturmesselement
- 11: Gehäuse
- 12: Tragring
- 13: Verschlussflansch
- 14: Bohrung Kolbenstange
- 15: Öffnung
- 16: Befestigungsflansch
- 17: vorderer Isolationsring
- 18: hinterer Isolationsring
- 19: Innenraum Gehäuse
- 20: Vorsprung Messring
- 21: Gleitfläche
- 22a: Federelement vorderer Isolationsring
- 22b: Federelement Messring
- 22c: Federelement hinterer Isolationsring
- 23: Dichtungselement
- 24: innere Mantelfläche Tragring
- 25: äußere Mantelfläche Tragring
- 26: Abschlusswand
- 27: Ausschnitt Verschlussflansch
- 28: Befestigungsabschnitt
- 29: Kolbenstangendichtung

## Patentansprüche

1. Messring (1) zur Temperaturmessung einer Kolbenstange (2), insbesondere der Kolbenstange (2) eines Verdichters, wobei der Messring (1) berührungslos um die Kolbenstange (2) angeordnet ist und zum Einsetzen eines ersten Temperaturmesselementes (3) eine erste Bohrung (4) aufweist, welche an einer äußeren Mantelfläche (5) des Messrings (1) austritt und mit ihrem Bohrlochtiefsten (6) bis an eine innere Mantelfläche (7) des Messrings (1) heranreicht.

2. Messring (1) nach Anspruch 1, bei dem das Bohrlochtiefste (6) in eine Ausnehmung (8) mündet und die Ausnehmung (8) in die innere Mantelfläche (7) des Messrings (1) eingebracht ist.

3. Messring (1) nach Anspruch 1, bei dem zusätzlich eine zweite Bohrung (9) zum Einsetzen eines zweiten Temperaturmesselementes (10) vorgesehen ist, welche mit ihrem ersten Ende an der äußeren Mantelfläche (5) des Messrings (1) austritt und mit ihrem zweiten Ende in einer Ausnehmung (8) mündet, wobei die Ausnehmung (8) in die innere Mantelfläche (7) des Messrings (1) eingebracht ist.

4. Messring (1) nach Anspruch 3, bei dem die erste und zweite Bohrung (4, 9) an gegenüberliegenden Seiten des Messrings (1) austreten.

5. Messring (1) nach einem der Ansprüche 1 bis 4, bei dem mindestens eine der Bohrungen (4, 9) in Umfangsrichtung schräg in den Messring (1) eingebracht sind.

6. Messring (1) nach Anspruch 5, bei dem die erste und die zweite Bohrung (4, 9) gegensinnig in den Messring (1) eingebracht sind.

7. Messeinheit zur Temperaturmessung einer Kolbenstange (2), umfassend
einen Messring (1) nach einem der Ansprüche 1 bis 6, wobei der Messring (1)
- berührungslos um die Kolbenstange (2) angeordnet ist,
- eine erste Bohrung (4) aufweist, welche an einer äußeren Mantelfläche (5) des Messrings (1) austritt und mit ihrem Bohrlochtiefsten (6) bis an eine innere Mantelfläche (7) des Messrings (1) heranreicht,
- in einem Gehäuse (11) angeordnet ist, welches aus einem Tragring (12) und einem Verschlussflansch (13) gebildet ist und eine in axialer Richtung verlaufende Bohrung (14) zur Aufnahme der Kolbenstange (2) aufweist,
sowie mindestens ein erstes Temperaturmesselement (3), welches in mindestens eine Öffnung (15) des Tragrings (12) eingesetzt ist und mit seiner Spitze in das Bohrlochtiefste (6) hineinreicht.

8. Messeinheit nach Anspruch 7, welche ein Temperaturmesselement (10) umfasst, das in eine Öffnung (15) des Tragrings (12) eingesetzt ist und mit seiner Spitze in eine in die innere Mantelfläche (7) des Messrings (1) angeordnete Ausnehmung (8) hineinragt.

9. Messeinheit nach Anspruch 7 oder 8, bei welcher die mindestens eine Öffnung (15) entsprechend der Bohrung (4, 9) ausgerichtet ist.

10. Messeinheit nach einem der Ansprüche 7 bis 9, bei welcher an dem äußeren Ende der Öffnung (15) jeweils ein Befestigungsflansch (16) ausgebildet ist.

11. Messeinheit nach einem der Ansprüche 7 bis 10, bei welcher der Messring (1) in axialer Richtung durch einen vorderen und einen hinteren Isolationsring (17, 18) begrenzt ist.

12. Messeinheit nach Anspruch 11, bei welcher die Isolationsringe (17, 18) aus PTFE gefertigt sind.

13. Messeinheit nach Anspruch 11 oder 12, bei welcher das Gehäuse (11) einen Innenraum (19) aufweist, dessen Breite in axialer Richtung der Breite des Messrings (1) und beider Isolationsringe (17, 18) entspricht.

14. Messeinheit nach einem der Ansprüche 11 bis 13, bei welcher der Messring (1) auf einer Seite mit einem in axialer Richtung konisch zulaufenden Vorsprung (20) und der vordere Isolationsring (17) auf der dem Messring (1) zugewandten Seite mit einer bezüglich des Vorsprungs (20) komplementären Gleitfläche (21) ausgebildet ist.

15. Messeinheit nach einem der Ansprüche 11 bis 14, bei welcher das Gehäuse (11) einen Innenraum (19) aufweist, dessen Höhe in radialer Richtung größer ausgebildet ist als der Außendurchmesser des Messrings (1) und/oder der Isolationsringe (17, 18).
